# EUROPÄISCHE PATENTANMELDUNG

(11) **EP 0 882 629 A1**
(43) Veröffentlichungstag der Anmeldung: **09.12.1998**
(21) Anmeldenummer: 98110065.4
(22) Anmeldetag: 03.06.1998
(51) Int. Cl.: B60R 21/26, F42B 3/04

(54) **Gasgenerator**

(30) Priorität: 03.06.1997 DE 19723256
(71) Anmelder: TRW Airbag Systems GmbH & Co. KG, 84544 Aschau am Inn (DE)
(72) Erfinder: Hofbauer, Ingrid, 81929 München 7 (DE); Leifheit, Markus, 85452 Moosinning (DE); Winterhalder, Marc, 84518 Garching/Alz (DE)
(74) Vertreter: Kitzhofer, Thomas, Dipl.-Ing.

(57) **Zusammenfassung**

Ein Gasgenerator, insbesondere für Fahrzeuginsassen-Rückhaltesysteme, mit einem Gehäuse (3) mit darin vorgesehenen Kammern, von denen wenigstens eine Kammer (7) mit Gas und wenigstens eine Kammer (19) mit Treibstoff gefüllt ist, und mit wenigstens einem Zünder (17) zum Zünden des Treibstoffs ist dadurch gekennzeichnet, daß die Zünderkappe (33) an einem Verschlußteil (31) durch Schweißen gas- und druckdicht befestigt ist, welches eine Öffnung (37) im Gehäuse verschließt.

## Beschreibung

Die Erfindung betrifft einen Gasgenerator, insbesondere für Fahrzeuginsassen-Rückhaltesysteme, mit einem Gehäuse mit wenigstens einer mit Gas gefüllten Kammer und wenigstens einer mit Treibstoff gefüllten Brennkammer, und mit wenigstens einem Zündmaterial aufweisenden Zünder zum Zünden des Treibstoffs, der eine Zünderkappe, die Zündmaterial einschließt, hat, wobei das Gehäuse ein Verschlußteil aufweist, welches eine Öffnung im übrigen Gehäuse verschließt.

Bei den mit Gas gefüllten Gasgeneratoren, insbesondere mit Druckgas gefüllten Hybrid-Gasgeneratoren, besteht das Problem, daß deren Gehäuse über Jahre hinweg druck- und gasdicht bleiben muß, damit das Gas nicht nach außen gelangt. Deshalb sind aufwendige Abdichtungsmaßnahmen erforderlich. Um einen Gasaustritt im Bereich des Zünders zu verhindern, wird deshalb bei den bisherigen Gasgeneratoren der Zünder in einer gas- und druckdichten Kammer angeordnet. Eine Berstmembrane, die üblicherweise die Stirnwand der Kammerwandung bildet, wird vom Zünder und gegebenenfalls von der angrenzenden Verstärkerladung zerstört, so daß die erzeugten heißen Gase und heißen Partikel in die angrenzende Brennkammer strömen können und dort den Brennstoff entzünden. Eine aufwendige Abdichtung ist beispielsweise in der DE 195 33 606 A1 gezeigt.

Die Erfindung schafft einen Gasgenerator, der einfacher aufgebaut ist als die bisher bekannten und kostengüngstig hergestellt werden kann. Dies wird bei einem Gasgenerator der eingangs genannten Art dadurch erreicht, daß die Zünderkappe am Verschlußteil durch Anschweißen gas- und druckdicht befestigt ist. Im Gegensatz zu den bekannten Gasgeneratoren ist eine separate, abgeschlossene Kammer für die Abdichtung des Zünders oder eine aufwendige Dichtung zwischen Zünderkappe und Verschlußteil nicht erforderlich. Die mit Gas gefüllte Kammer ist zudem zum Zünder hin offen. Ein Entweichen von Gas zwischen Zünder und Verschlußteil ist aufgrund der gas- und druckdichten Schweißverbindung ausgeschlossen. Beim Abbrennen des Zünders kann der Treibstoff zudem sehr schnell gezündet werden, da zwischen Zündmaterial und Treibstoff nur die sehr dünne Zünderkappe ist. Bislang wurde Schweißen in unmittelbarer Nähe von pyrotechnischem Material vermieden. Die Erfindung setzt sich bewußt hierüber hinweg.

Vorteilhafte Ausgestaltungen der Erfindung bilden die Gegenstände der Unteransprüche.

Gemäß der bevorzugten Ausführungsform ist die mit Gas gefüllte Kammer eine Druckkammer, deren Gas unter Druck steht und die zur Brennkammer hin offen ist.

Die gas- und druckdichte Abdichtung erfolgt vorzugsweise durch Laserschweißen.

Die Öffnung, auf die das Verschlußteil aufgesetzt wird, dient vorzugsweise zum Befüllen des Gasgenerators mit Treibstoff.

Weitere Merkmale und Vorteile der Erfindung ergeben sich aus der nachfolgenden Beschreibung und aus der nachfolgenden Zeichnung, auf die Bezug genommen wird.

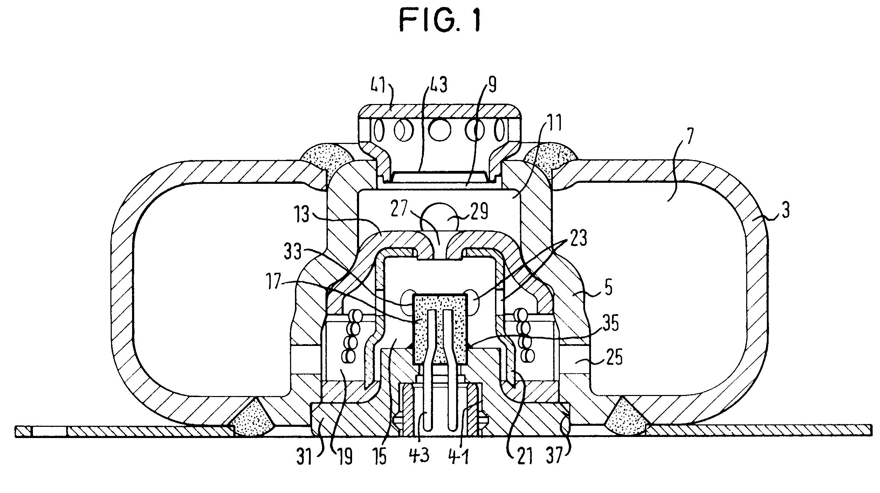

Figur 1, die einzige Zeichnung, zeigt einen Längsschnitt durch eine Ausführungsform des erfindungsgemäßen, als Hybrid-Gasgenerator ausgebildeten Gasgenerators.

In Figur 1 ist ein Hybrid-Ringkammer-Gasgenerator für ein Fahrzeuginsassen-Rückhaltesystem, genauer gesagt zum Aufblasen eines Fahrer-Gassacks gezeigt. Das Gehäuse des Gasgenerators weist eine äußere Wandung 3 und eine radial von dieser beabstandete innere Wandung 5 auf. Zwischen den Wandungen ist eine ringförmig verlaufende Druckkammer 7 gebildet, die mit Druckgas gefüllt ist. Die innere Wandung 5 trennt die Druckkammer 7 von einem radial inneren Raum, der in einzelne Kammern unterteilt ist. Eine obere, an eine Ausströmöffnung 9 angrenzende Mischkammer 11 wird durch einen Zwischenboden 13 von zwei unteren Kammern getrennt, nämlich einer radial inneren Expansionskammer 15, in die ein Zünder 17 ragt, und einer radial äußeren ringförmigen Brennkammer 19. Die Brennkammer 19 ist mit Treibstoff in Form von Tabletten gefüllt. Die Brennkammer 19 und die Expansionskammer 15 sind durch einen kappenartigen Diffusor, im folgenden Zünderdiffusor 21 genannt, voneinander getrennt. Da keine der Kammern im Inneren des Gehäuses vollständig abgeschlossen ist, herrscht in jeder Kammer derselbe Druck. Mehrere Öffnungen 23 im Zünderdiffusor 21, Öffnungen 25 in der inneren Wandung 5, eine zentrale axiale Öffnung 27 im Zwischenboden sowie zwei diametral gegenüberliegende, obere Öffnungen 29 in der inneren Wandung 5 dienen dem Druckausgleich und natürlich dazu, daß das erzeugte Gas im Rückhaltefall gezielt bis zur Austrittsöffnung 9 gelangt.

Der Zünder 17 ist gas- und druckdicht an einem Verschlußteil 31 in Form einer scheibenförmigen Bodenplatte befestigt und bildet mit dieser eine vormontierte Einheit. Die gas- und druckdichte Verbindung wird dadurch erreicht, daß eine Zünderkappe 33 aus Metall, welche die Primär- und die Sekundärladung des Zünders umgibt, vorzugsweise durch Laserschweißen am Verschlußteil gas- und druckdicht befestigt ist. Eine entsprechende Schweißnaht ist mit 35 gekennzeichnet. Das Zündmaterial der die Primärladung umgebenden Sekundärladung grenzt unmittelbar an die Zünderkappe 33 an. Die Zünderkappe ist zylindrisch ausgebildet und hat eine in die Expansionskammer 15 ragende Stirnwand sowie einen zylindrischen Mantel. Das Verschlußteil 31 hat innenseitig, d.h. zur Expansionskammer 15 hin, eine kreisringförmige Vertiefung, die in ihrer Geometrie und ihren Abmaßen der der Zünderkappe 33 entspricht und in die die Zünderkappe vor dem Anschweißen eingesteckt ist. Das Verschlußteil 31 hat auch eine außenseitige Vertiefung 41, in die Steckkontakte 43 des Zünders ragen. Die Steckkontakte 43 ragen aber nicht gegenüber dem Verschlußteil 31 nach außen vor, so daß sie beim Transport des Gasgenerators auch nicht verbogen werden können. In die Vertiefung wird beim Einbau des Gasgenerators ein Stecker eingesetzt. Das Verschlußteil 31 dient zum gas- und druckdichten Verschließen einer Befüllöffnung 37. Über die Befüllöffnung 37 wird Treibstoff in die Brennkammer 19 gefüllt. Anschließend wird das Verschlußteil 31 auf die Befüllöffnung 37 gesetzt und am Gehäuse verschweißt. Schließlich wird über eine gegenüberliegende Befüllöffnung für Gas, die in Figur 1 bereits durch einen Verschluß in Form eines Diffusors 41 mit daran befestigter Berstscheibe 43 verschlossen gezeigt ist, Druckgas eingefüllt, der Diffusor 41 aufgesetzt und ebenfalls am Gehäuse verschweißt.

Bei einem Unfall aktiviert eine nicht gezeigte Auslösesensorik den Zünder 17, so daß die Primär- und die Sekundärladung abbrennen und Gas sowie heiße Partikel erzeugen. Die Zünderkappe 33 ist so ausgebildet, daß sich ihre Stirnwand, die der Berstscheibe 43 zugewandt ist, zuerst öffnet und die Gase und Partikel mit großer Geschwindigkeit, begleitet von einer Druckwelle, in die Expansionskammer 15 eintreten und sich darin gleichmäßig verteilen. Ein Teil der Druckwelle, der heißen Gase und Partikel trifft, durch die Öffnung 27 hindurchtretend, unmittelbar auf die Berstscheibe 43 auf und führt zu deren sofortiger Zerstörung. Der andere Teil der heißen Gase und Partikel gelangt über die Öffnungen 23 in die Brennkammer 19, wo diese zur Zündung des Treibstoffs führen. Die beim Abbrennen des Treibstoffs erzeugten Gase wiederum strömen durch die Öffnungen 25 in die Druckkammer und vermischen sich darin mit dem Druckgas. Das heiße Gas vermischt sich mit dem kalten Druckgas und verbrennt dabei nach. Über die Öffnungen 29 strömen das Druckgas sowie das heiße Gas in die Mischkammer 11, ebenso wie das heiße, über die Expansionskammer 15 in die Mischkammer 11 gelangende Gas, das beim Abbrennen des Treibstoffs entsteht. Auch in der Mischkammer 11 reagieren die Gase chemisch miteinander. Die Gase verlassen schließlich über den Diffusor 41 das Gehäuse.

Da der Zünder 17 nicht noch zusätzlich von einer ihn umgebenden Wandung zur Brennkammer 19 hin vollständig abgeschirmt ist, ergibt sich ein schnelles Anzündverhalten. Der Expansionsraum 15 und der Zünderdiffusor 21 bewirken ein gleichmäßiges Einströmen der heißen Gase in die Brennkammer 19 und führen damit zu einem reproduzierbaren Anzündverhalten, ohne daß eine leistungsstarke Boosterladung benutzt werden muß.

## Patentansprüche

1. Gasgenerator, insbesondere für Fahrzeuginsassen-Rückhaltesysteme, mit einem Gehäuse (3) mit wenigstens einer mit Gas gefüllten Kammer (7) und wenigstens einer mit Treibstoff gefüllten Brennkammer (19), und mit wenigstens einem Zündmaterial aufweisenden Zünder (17) zum Zünden des Treibstoffs, der eine Zünderkappe hat, die das Zündmaterial einschließt, wobei das Gehäuse ein Verschlußteil aufweist, welches eine Öffnung im übrigen Gehäuse verschließt, dadurch gekennzeichnet, daß die Zünderkappe (33) am Verschlußteil durch Anschweißen gas- und druckdicht am Verschlußteil (31) befestigt ist.

2. Gasgenerator nach Anspruch 1, dadurch gekennzeichnet, daß die mit Gas gefüllte Kammer eine Druckkammer (7) ist, welche unter Druck stehendes Gas enthält und welche zur Brennkammer (19) hin offen ist.

3. Gasgenerator nach Anspruch 1 oder 2, dadurch gekennzeichnet, daß die Öffnung als Befüllöffnung (37) wenigstens für den Treibstoff dient.

4. Gasgenerator nach einem der Ansprüche 1 bis 3, dadurch gekennzeichnet, daß die Zünderkappe (33) durch Laserschweißen am Verschlußteil (31) befestigt ist.

5. Gasgenerator nach einem der vorstehenden Ansprüche, dadurch gekennzeichnet, daß das Verschlußteil (31) wenigstens einen Teil einer Bodenplatte des Gehäuses bildet.

6. Gasgenerator nach einem der vorstehenden Ansprüche, gekennzeichnet durch eine Mischkammer (11), die mit der mit Gas gefüllten Kammer (7) und der Brennkammer (19) in Strömungsverbindung steht und die eine vor Aktivierung des Gasgenerators geschlossene Ausströmöffnung (9) aufweist.

7. Gasgenerator nach einem der vorstehenden Ansprüche, dadurch gekennzeichnet, daß der Gasgenerator ein Ringkammer-Gasgenerator ist, daß die Brennkammer (19) von der mit Gas gefüllten Kammer (7) in radialer Richtung umgeben ist und daß die Befüllöffnung (37) sich in radialer Richtung nur bis zur Brennkammer (19) erstreckt.

8. Gasgenerator nach einem der vorstehenden Ansprüche, dadurch gekennzeichnet, daß sich der Zünder (17) in die Brennkammer (19) erstreckt.

9. Gasgenerator nach einem der Ansprüche 1 bis 7, dadurch gekennzeichnet, daß sich der Zünder (17) in eine Expansionskammer (15) für heiße, beim Abbrennen des Zündmaterials entstehende Gase erstreckt, die von der Brennkammer (19) umgeben ist und mit dieser in Strömungsverbindung steht.

10. Gasgenerator nach einem der vorstehenden Ansprüche, dadurch gekennzeichnet, daß sämtliche Kammern im Inneren des Gehäuses (3) in nicht aktiviertem Zustand offen sind, so daß ein einheitlicher Druck im Inneren des Gasgenerators herrscht.

11. Gasgenerator nach einem der vorstehenden Ansprüche, dadurch gekennzeichnet, daß das Verschlußteil (31) eine innenseitige Vertiefung hat, in die die Zünderkappe (33) teilweise gesteckt ist und die in ihrer Geometrie und ihren Abmaßen der der Zünderkappe (33) angepaßt ist.

12. Gasgenerator nach einem der vorstehenden Ansprüche, dadurch gekennzeichnet, daß das Verschlußteil (31) eine außenseitige Vertiefung (41) hat, daß der Zünder (17) Steckkontakte (43) zum Anschluß eines Steckers hat und daß die Steckkontakte (43) in die außenseitige Vertiefung (41) ragen und nicht außenseitig gegenüber dem Verschlußteil (31) vorstehen.

13. Gasgenerator nach einem der vorstehenden Ansprüche, dadurch gekennzeichnet, daß die Zünderkappe (33) zylindrisch ausgebildet ist und eine Stirnwand hat, wobei beim Zünden zuerst die Stirnwand und anschließend der Mantel geöffnet wird.
